# FASCICULE DE BREVET EUROPEEN

(11) **EP 3 794 703 B1**
(45) Date de publication et mention de la délivrance du brevet: **15.06.2022**
(21) Numéro de dépôt: 19722140.1
(22) Date de dépôt: 10.05.2019
(51) Int. Cl.: H02J 7/00, B60L 53/16, B60L 53/18, H01M 10/42

(54) **DISPOSITIF DE CONTRÔLE ET D'ASSISTANCE DU NIVELLEMENT DE CHARGE D'UN MODULE DE BATTERIE, PROCÉDÉ ET KIT CORRESPONDANTS**
VORRICHTUNG ZUR STEUERUNG UND UNTERSTÜTZUNG DES LADEAUSGLEICHS EINES BATTERIEMODULS SOWIE ENTSPRECHENDES VERFAHREN UND BAUSATZ
DEVICE FOR CONTROLLING AND ASSISTING THE CHARGE LEVELLING OF A BATTERY MODULE, AND CORRESPONDING METHOD AND KIT

(30) Priorité: 18.05.2018 FR 1854201
(43) Date de publication de la demande: 24.03.2021
(73) Titulaire: E-Xteq Europe, 78640 Saint-Germain-de-La-Grange (FR)
(72) Inventeur: BREBANT, Morgan, 78950 GAMBAIS FRANCE (FR)
(74) Mandataire: Vidon Brevets & Stratégie
(86) Numéro de dépôt international: PCT/EP2019/062001
(87) Numéro de publication internationale: WO 2019/219515

(56) Documents cités:
- EP-A1- 2 979 918
- CN-U- 205 304 311
- US-A1- 2014 217 978
- US-A1- 2016 121 735

## Description

### 1. Domaine de l'invention

L'invention se rapporte au domaine des batteries électriques de véhicules automobiles.

Plus précisément, l'invention se rapporte notamment au domaine de la connexion électrique pour la maintenance des batteries électriques.

L'invention porte spécifiquement sur la connectique utilisée pour la mise à niveau de la charge électrique d'un module de batterie au sein d'un pack-batterie, typiquement sur des moyens de connexion réversibles à usage répété, utilisables notamment pour le contrôle électronique de la charge et/ou de la décharge d'une batterie, en particulier dans le but de la mise à niveau de la charge électrique d'un module de batterie au sein d'un pack-batterie, par exemple lorsque ce module remplace un module de batterie défectueux.

L'invention est généralisable à d'autres situations dans lesquelles on a besoin d'assurer des connexions électriques pour contrôler l'état de charge des modules de batterie, et de leurs cellules internes, lors d'opération de maintenance de batteries.

### 2. Art antérieur

Les véhicules électriques et hybrides suscitent un fort intérêt et sont actuellement de plus en plus développés par les constructeurs automobiles.

Ces véhicules mettent en œuvre un pack-batterie généralement composé de plusieurs modules de batterie juxtaposés et reliés entre eux dans un boîtier de protection.

Chaque module comprend un certain nombre de cellules de stockage d'énergie électrique, ou « cellules électriques », accolées et connectées entre elles, qui peuvent prendre une forme cylindrique, prismatique, ou de sachet (en anglais « *pouch-cell* »)*.*

Par ailleurs, au sein du module, les cellules électriques, qui sont généralement montées en série, sont accessibles individuellement via des circuits de contrôle - typiquement de simples câblages - comprenant notamment la possibilité de mesurer leur tension individuelle de charge, ainsi que, dans certains cas, d'autres paramètres de chaque cellule et de chaque module, comme leur température.

Au cours de la vie d'un pack-batterie, il peut arriver qu'un module devienne défectueux : dans ce cas, il est nécessaire de l'extraire du pack-batterie et de le remplacer par un module neuf pour assurer le fonctionnement de la batterie.

Or, au moment de son installation, le module neuf peut présenter un niveau de charge, ou tension électrique, différent des autres modules du pack-batterie, ce qui n'est pas souhaitable car cela entraîne un niveau d'usure et une vitesse de déchargement non homogènes au sein du pack-batterie.

La tension électrique de ce module neuf doit alors être nivelée ou égalisée (en anglais « *levelized* ») par rapport à la tension électrique des autres modules du pack-batterie, de sorte à présenter un niveau de charge équivalent.

En pratique, le module doit être soumis à une opération de charge ou décharge différentielle, afin de rétablir un niveau de charge uniforme au sein des différents modules.

La mise à niveau, ou nivellement ou encore égalisation, (en anglais *« levelization* ») de la charge d'un module parmi une série de modules d'un pack-batterie peut également être opérée sur un module non-défectueux présentant un niveau de charge différent des autres modules, et sans que ce module soit donc nécessairement remplacé.

Les cellules électriques qui composent le module doivent alors être contrôlées afin de déterminer si le niveau de charge souhaité est atteint.

Afin de mener à bien les opérations de nivellement - ou égalisation - de charge et de contrôle de la charge, il est nécessaire d'utiliser une station de contrôle et de nivellement de charge des modules (en anglais *« module balancer»),* à laquelle le module peut être connecté.

Afin de réaliser le nivellement de charge, un câble de nivellement de charge en Y à trois branches, ou câble « deux en un », est typiquement utilisé entre le module et la station de contrôle et de nivellement de charge.

Par ailleurs, afin de réaliser la vérification et le contrôle (en anglais « *monitoring* ») de l'état de charge des cellules électriques, un câble de contrôle est classiquement utilisé entre le module et la station de contrôle et de nivellement de charge.

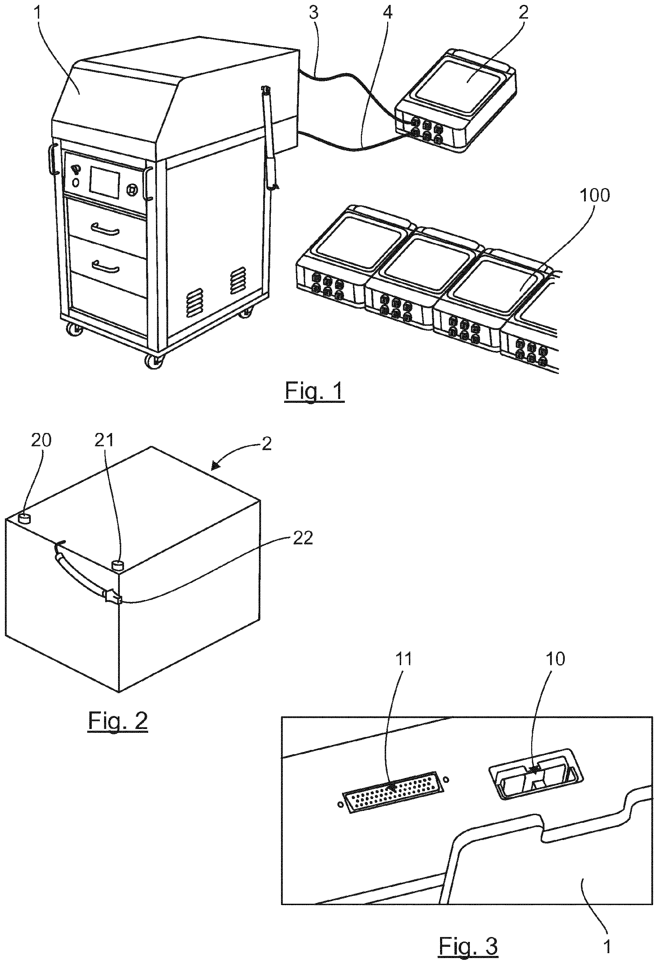

Ainsi, comme illustré sur la **figure 1****,** une installation de contrôle et de nivellement de charge de module comprend au moins un module de batterie 2, issu d'un pack-batterie 100, relié à une station de contrôle et de nivellement de charge 1 par l'intermédiaire de deux câbles, un premier câble, dit câble de nivellement de charge 3 et un second câble, dit câble de contrôle *(monitoring) 4.*

Une station de contrôle et de nivellement de charge comporte classiquement une interface de connexion, illustrée sur la **figure 3****,** présentant d'une part au moins un premier connecteur de charge 10 destiné à coopérer avec une extrémité d'une première branche du câble de nivellement de charge 3, plus précisément la tige du Y, et d'autre part au moins un second connecteur 11 destiné à coopérer avec une extrémité du câble de contrôle 4.

Le module de batterie, quant à lui, comporte d'une part deux bornes de charge 20, 21, positive et négative, illustrées sur la **figure 2** destinées à coopérer avec les extrémités des deux autres branches du câble de nivellement de charge 3, et d'autre part un connecteur de contrôle 22 destiné à coopérer avec l'extrémité du câble de contrôle 4.

Le module 2 illustré sur la **figure 2** constitue seulement un exemple de module de batterie. Il existe de nombreux types de modules, conçus par divers constructeurs automobiles, qui peuvent être très différents les uns des autres, mais qui présentent toujours à la fois au moins deux bornes de charge et au moins un connecteur de contrôle.

Chaque modèle de module peut toutefois présenter des bornes de charge et des connecteurs de contrôle spécifiques et distincts de ceux des autres modèles.

Il existe donc, en fonction du module, une pluralité de combinaisons possibles de premier câble, de nivellement de la charge, et de second câble, de contrôle du niveau de charge.

Cette absence de normalisation actuelle des connecteurs de contrôle, et plus généralement des spécifications techniques des interfaces et des câblages des bornes de charge et des unités de monitoring des batteries et de leurs terminaisons, entraîne des difficultés et des complexités pour l'entretien de ces batteries.

Ainsi, dans les garages d'entretien automobile et/ou dans les unités de maintenance de batteries, les opérateurs de maintenance doivent disposer d'autant de câbles de charge d'une part, et d'autant de câbles de contrôle 4 que de types de bornes et de connecteurs de contrôle respectivement, afin de pouvoir contrôler le niveau de chargement de n'importe quel modèle de module de batterie. La nécessité d'approvisionner et de stocker cette diversité de câbles constitue un problème d'autant plus prégnant qu'il existe actuellement plus d'une vingtaine de types de modules de batteries, et plus d'une dizaine d'interfaces de connexion différentes, et que cette diversité a plutôt tendance à s'accroître du fait de l'évolution continue des techniques et de l'entrée de nouveaux acteurs sur ces marchés en forte croissance.

En conséquence, dans la situation actuelle, les opérateurs doivent gérer une quantité importante de faisceaux de câbles différents, ce qui est peu efficace et source de confusion et de temps perdu : chaque poste de travail doit constamment vérifier qu'il possède bien toute la diversité des câblages permettant d'intervenir sur n'importe quel type de batterie et qu'aucun n'a été égaré, et à chaque nouvelle intervention, l'opérateur doit à nouveau identifier le câble de contrôle adéquat, et le cas échéant le câble de charge approprié, parmi une pluralité de câbles.

L'invention a pour objectif de proposer une solution technique d'identification des câbles pouvant coopérer avec une pluralité de modèles de modules de batterie qui permette de simplifier et rationaliser cette situation, et notamment de visualiser rapidement quelle combinaison de câbles est nécessaire pour connecter le module à la station de contrôle et de nivellement de charge, et pour assister l'opérateur dans cette opération.

### 3. Résumé de l'invention

A cet effet, l'invention propose un dispositif de contrôle et d'assistance du nivellement de charge d'un module de batterie, destiné à coopérer avec un kit de dispositifs de câblage conçus pour être connectés d'une part à un circuit de contrôle électronique d'un module de batterie électrique et d'autre part à une station de contrôle dudit module de batterie, le kit de dispositifs de câblage étant constitué d'un premier jeu d'au moins deux câbles de charges et/ou d'un second jeu d'au moins deux câbles de contrôle de charge.

Chaque dispositif de câblage en configuration de connexion avec un module de batterie déterminé comprenant une paire de connexion de câbles compatibles complémentaires, à savoir d'une part un câble de charge, et d'autre part un câble de contrôle de la charge, choisis chacun au sein dudit kit de dispositifs de câblage de façon à être compatibles avec ledit module de batterie.

Selon l'invention le dispositif comprend :
- des moyens de reconnaissance et d'identification dudit câble de charge et dudit câble de contrôle de la charge dudit dispositif de câblage en configuration de connexion, et des moyens de fourniture de données de reconnaissance et d'identification ;
- des moyens de stockage et d'interrogation d'une bibliothèque de correspondance et de compatibilité entre lesdits modules de batterie et lesdits câbles dudit kit de dispositifs de câblage compatibles avec chacun desdits modules de batterie ;
- des moyens de comparaison des données de reconnaissance et d'identification fournies par lesdits moyens de reconnaissance et d'identification avec les données stockées dans ladite bibliothèque de correspondance et de compatibilité, et des moyens de fourniture d'un résultat de comparaison ;
- des moyens d'affichage et/ou d'alerte activés par lesdits moyens de comparaison.

Selon un autre aspect de l'invention, ledit au moins un câble de charge est du type multi-connecteurs, comprenant :
- une branche principale de câblage située à une première extrémité dudit dispositif de câblage, ladite branche principale étant munie d'une prise de connexion destinée à se connecter à une borne complémentaire de ladite station de contrôle ;
- une pluralité de branches secondaires de câblage, chacune desdites branches secondaires étant pourvue d'un connecteur électrique destiné à se connecter à un connecteur complémentaire dudit module de batterie.

Selon un autre aspect de l'invention, lesdits câbles comprennent des éléments d'identification, intégrés à tout ou partie de chaque câble et/ou d'un ou plusieurs connecteurs de câble et lesdits moyens de reconnaissance et d'identification sont constitués par au moins un dispositif de détection et de lecture desdits éléments d'identification.

Selon un autre aspect de l'invention, lesdits éléments d'identification appartiennent au groupe comprenant les pastilles, étiquettes ou balises électroniques et/ou électromagnétiques, actives ou passives avec ou sans contact, y inclus les circuits de mesure électriques et électroniques et les puces RFID.

Selon un autre aspect de l'invention, lesdits moyens d'affichage et/ou d'alerte comprennent un écran d'affichage.

Selon un autre aspect de l'invention, lesdits moyens d'affichage et/ou d'alerte comprennent un écran de saisie de données.

Selon un autre aspect de l'invention, ledit dispositif est un boîtier autonome.

Selon un autre aspect de l'invention, ledit dispositif est intégré à ladite station de contrôle.

Selon un autre aspect de l'invention, ledit dispositif comprend des moyens de mise à jour de ladite bibliothèque.

L'invention propose également un procédé de contrôle et d'assistance du nivellement de charge d'un module de batterie, destiné à coopérer avec au moins un câble de charge et au moins un câble de contrôle de la charge, choisis au sein d'un kit de dispositifs de câblage conçus pour être connectés d'une part à un circuit de contrôle électronique d'un module de batterie électrique et d'autre part à une station de contrôle dudit module de batterie,

Le kit de dispositifs de câblage est constitué d'un premier jeu d'au moins deux câbles de charges et/ou d'un second jeu d'au moins deux câbles de contrôle de charge, chaque dispositif de câblage en configuration de connexion avec un module de batterie déterminé comprenant une paire de connexion de câbles compatibles complémentaires, à savoir d'une part un câble de charge, et d'autre part un câble de contrôle de la charge, choisis chacun au sein dudit kit de dispositifs de câblage de façon à être compatibles avec ledit module de batterie.

Le procédé met en œuvre un dispositif selon l'invention, destiné à coopérer avec ledit kit, et comprend les étapes de :
- branchement dudit câble de charge à ladite station de contrôle ;
- branchement dudit câble de contrôle à ladite station de contrôle et/ou mise à proximité dudit câble de contrôle avec ladite station de contrôle ;
- identification dudit câble de contrôle grâce auxdits moyens de reconnaissance et d'identification du dispositif ;
- détermination et affichage d'une liste de références de modules de batterie compatibles avec ledit câble de charge et ledit câble de contrôle de la charge.

Selon un autre aspect de l'invention, ledit procédé comprend en outre, après branchement dudit câble de charge, une étape d'identification dudit câble de charge grâce auxdits moyens de reconnaissance et d'identification du dispositif.

Selon un autre aspect de l'invention, ledit procédé comprend en outre une étape d'affichage des câbles de contrôle de la charge et/ou des modules compatibles avec ledit câble de charge.

Selon un autre aspect de l'invention, ledit procédé comprend en outre, une étape d'activation desdits moyens d'affichage et/ou d'alerte dudit dispositif par lesdits moyens de comparaison lorsque ledit résultat de comparaison entre lesdites données de reconnaissance et d'identification et les données stockées dans ladite bibliothèque de correspondance et de compatibilité est nul.

### 4. Figures

D'autres caractéristiques et avantages apparaîtront plus clairement à la lecture de la description détaillée suivante de modes de réalisation particuliers de l'invention, donnés à titre de simples exemples illustratifs et non limitatifs, et des dessins annexés, parmi lesquels :
- la **figure 1** illustre une station de contrôle et de nivellement de la charge d'un module de batterie connectée à un module de batterie par l'intermédiaire d'un premier câble de charge, et d'un second câble de contrôle de la charge ;
- la **figure 2** illustre un exemple de module de batterie, comprenant d'une part deux bornes électriques de charge et d'autre part un connecteur électrique dédié au contrôle ;
- la **figure 3** illustre l'interface d'une station de contrôle et de nivellement de charge, comprenant au moins un connecteur de charge dédié au nivellement de charge et au moins une borne de connexion dédiée au contrôle *(monitoring)* de charge ;
- la **figure 4** illustre un câble de charge en Y, comprenant une branche principale destinée à être reliée au connecteur de charge de la station et deux branches secondaires de câble destinées à être reliées aux bornes électriques de charge du module ;
- la **figure 5** illustre un câble de contrôle de la charge, comprenant une branche principale destinée à être reliée aux bornes de connexion de la station et deux branches secondaires destinées à être reliées à des connecteurs complémentaires du module ;
- la **figure** 6 illustre le dispositif de contrôle et d'assistance du nivellement de charge d'un module de batterie selon l'invention ;
- la **figure 7** illustre un kit de dispositifs de câblage constitué d'un premier jeu d'au moins deux câbles de charges et/ou d'un second jeu d'au moins deux câbles de contrôle de charge ;
- la **figure 8A** illustre un premier mode de réalisation d'un procédé de contrôle et d'assistance du nivellement de charge d'un module de batterie selon l'invention, mettant en œuvre le dispositif de contrôle et d'assistance de l'invention ;
- la **figure 8B** illustre un second mode de réalisation d'un tel procédé selon l'invention, incluant des étapes supplémentaires ou de substitution par rapport aux étapes du procédé de la figure 8A ;
- la **figure 9** illustre une variante de procédé de contrôle et d'assistance du nivellement de charge d'un module de batterie selon l'invention, dans lequel les données d'entrées sont constituées par au moins une référence de module.

### 5. Description détaillée

### 5.1 Principe général de l'invention

L'invention propose donc un nouveau concept de gestion des dispositifs de câblage applicables à la connexion d'un module de batterie à une station de contrôle et de nivellement de charge, qui permette d'offrir une assistance et une optimisation pour l'opérateur en cas de kits de câblage foisonnants, pour orienter et faciliter la recherche des bons jeux de câbles et alerter le cas échéant sur les erreurs de choix.

Dans ce but, l'invention concerne d'une part des caractéristiques techniques spécifiques aux dispositifs et kits de câblage et d'assistance selon l'invention, et d'autre part des procédures originales de détection et de vérification automatiques, et de communication en IHM.

L'invention propose en particulier un dispositif de contrôle et d'assistance du nivellement de charge d'un module de batterie destiné à coopérer avec un kit de dispositifs de câblage, constitué d'un premier jeu d'au moins deux câbles de charges et/ou d'un second jeu d'au moins deux câbles de contrôle de charge, ces câbles étant conçus pour être connectés d'une part à un module de batterie électrique et d'autre part à une station de contrôle du module de batterie.

Selon le principe général de l'invention, le dispositif comprend :
- des moyens de reconnaissance et d'identification du câble de charge et du câble de contrôle de la charge, et des moyens de fourniture de données de reconnaissance et d'identification ;
- des moyens de stockage et d'interrogation d'une bibliothèque de correspondance et de compatibilité entre les modules de batterie et les câbles du kit compatibles avec chacun des modules de batterie ;
- des moyens de comparaison des données de reconnaissance et d'identification fournies par les moyens de reconnaissance et d'identification avec les données stockées dans la bibliothèque de correspondance et de compatibilité, et des moyens de fourniture d'un résultat de comparaison ;
- des moyens d'affichage et/ou d'alerte activés par les moyens de comparaison.

### 5.2 Description d'un mode de réalisation de l'invention

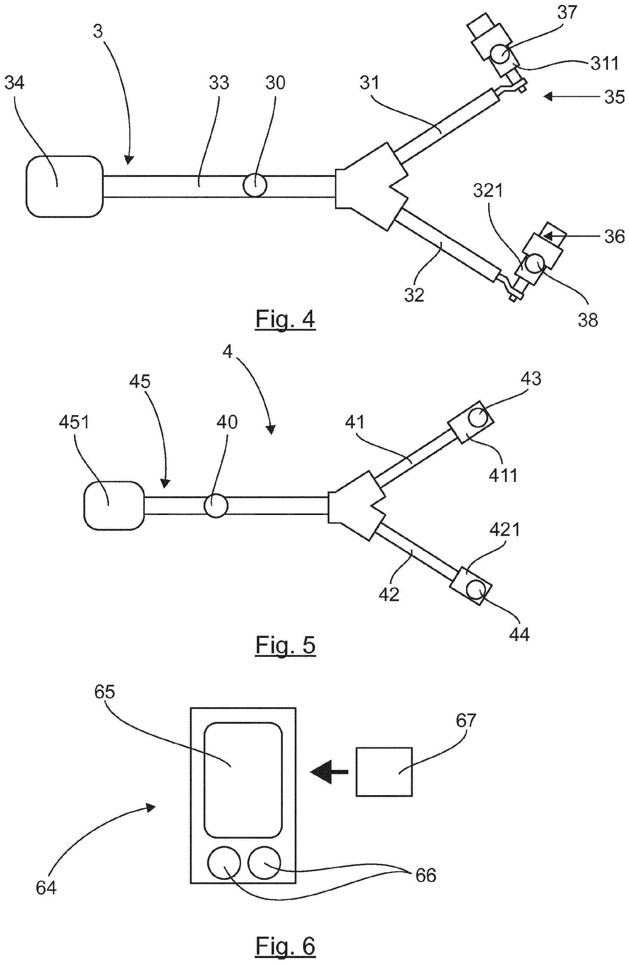

Les **figures 4 et 5** illustrent respectivement des modes de réalisation possibles, mais non limitatifs, pour un câble de charge 3 et un câble de contrôle de la charge 4 d'un module de batterie, du type utilisables dans le cadre de l'invention.

Le câble de charge 3 est ici de type « deux en un », et comprend trois branches de câble : une branche principale 33 destinée à être connectée à la station de contrôle de charge 1 et deux branches secondaires 31, 32 destinées à être connectées au module 2, typiquement au pôle « + » (positif) et au pôle « - » (négatif) du module, ou inversement.

Pour cela, la branche principale 33 comporte à son extrémité un connecteur 34 destiné à être inséré dans un connecteur de charge 10 de la station de contrôle et les branches secondaires 31, 32 comportent chacune à leur extrémité des fiches de connexion 311, 321 destinées à être insérées dans des bornes de charge du module 2.

Ce câble de charge 3 comprend donc trois éléments de connexion distincts 34, 311, 321.

Le câble de contrôle (« monitoring ») de la charge 4 comprend une branche principale 45 destinée à être connectée à la station de contrôle de charge 1 et deux branches secondaires 41, 42 destinées à être connectées chacune à un module 2.

Pour cela, la branche principale 45 comporte à son extrémité une prise de connexion 451 destinée à être inséré dans une borne de connexion électrique 11 de la station de contrôle et les branches secondaires 41, 42 comportent chacune à leur extrémité des connecteurs électriques 411, 421 destinés à être chacune à un connecteur complémentaire 22 du module 2.

Le câble de contrôle 4 est de type « multi-connecteurs » dans le sens où il présente une pluralité de branches secondaires et connecteurs correspondants, par exemple entre deux et dix branches secondaires, et de préférence entre trois et cinq branches secondaires.

Les branches secondaires sont interconnectées avec la branche principale via un module de distribution électrique qui assure une mise en connexion électrique sélective de la prise de connexion avec chacun des connecteurs électriques 411, 421.

Chaque connecteur électrique 411, 421, présente une configuration de connexion différente de celle des autres connecteurs électriques, adaptée à un type de module de batterie spécifique, répondant à un standard différent de connexion, par exemple en ce qui concerne le nombre, les dimensions, la géométrie et/ou la disposition des conducteurs individuels de chaque connecteur 411, 421.

Ainsi, un seul câble de contrôle de charge 4 est compatible avec une pluralité de modules de batterie présentant des standards de connexion différents (par exemple de taille, puissance, ou encore marque distinctes).

Le principe d'un tel câble de contrôle « multi-connecteurs » 4, ainsi que différentes variantes et modes de réalisation, sont décrits dans une demande de brevet prioritaire parallèle du même demandeur et déposée le même jour que la présente demande de brevet, le contenu de cette demande de brevet prioritaire parallèle étant ici incorporé par référence.

Ce câble de contrôle de charge 4 comprend donc au moins trois éléments de connexion distincts 451, 411, 421.

Toutefois, selon le type de module de batterie à charger sur la station, par exemple selon sa marque, sa taille ou sa puissance, les bornes de charge 20, 21 et le connecteur 22 de contrôle du module peuvent varier.

Ainsi, les câbles de charge 3 et de contrôle 4 à utiliser pour un module donné doivent être sélectionnés par l'opérateur parmi les jeux de câbles disponibles, pour que les différents éléments de connexion 311, 321, 411 au module 2 soient compatibles avec ce dernier.

Par ailleurs, l'interface de la station de contrôle 1 peut être amenée à évoluer (par exemple du fait des évolutions techniques) et ainsi présenter diverses bornes de connexion 11 et connecteurs de charge 10.

Ainsi, les câbles de charge 3 et de contrôle 4 doivent également être sélectionnés par l'opérateur parmi les jeux de câbles disponibles pour que les différents éléments de connexion 34, 451 à la station 1 soient compatibles avec l'interface de cette dernière.

En d'autres termes, un kit de dispositifs de câblage selon l'invention doit comprendre des câbles de charge 3 et des câbles de contrôle de charge 4 qui offrent toutes les combinaisons nécessaires pour être adaptés à tous les types de modules et de stations dont les interfaces de connexion peuvent varier.

Il existe donc une pluralité de possibilités de combinaison de ces câbles de charge 3 et de contrôle de charge 4 que l'opérateur doit pouvoir sélectionner parmi les jeux de câbles disponibles en fonction du type de module à charger et du type de station utilisée.

Selon l'invention, pour permettre à l'opérateur de définir facilement quelle combinaison de câble de charge et de contrôle de charge 3, 4 est appropriée, un dispositif 64 de contrôle et d'assistance du nivellement de charge est utilisé, permettant d'identifier quels types de câbles 3, 4 sont approchés vers - ou connectés à - la station, via notamment la détection de leurs éléments de connexion 34, 451, 311, 321, 411, 421, et ainsi de fournir à l'opérateur un résultat sous la forme d'une liste de modules compatibles avec ces câbles 3, 4.

Selon l'invention, afin de permettre une identification des câbles 3, 4, ces derniers sont munis d'éléments d'identification sous la forme de tags qui sont de préférence intégrés à tout ou partie des éléments de connexion 311, 321, 411, 421 vers le module.

Chaque fiche ou connecteur peut être ainsi identifié individuellement.

Dans certaines circonstances, les tags peuvent également être intégrés à la gaine formant la branche principale 33, 45 des câbles.

Même dans le cas de câbles multi-connecteurs, un seul tag identifiant l'ensemble du câble peut être suffisant si l'objectif est seulement de savoir si le câble inclut bien le bon connecteur et si la nature des différents connecteurs du câble est bien connue par ailleurs (par exemple dans la bibliothèque de données dont il sera question ci-après).

La **figure 4** illustre ainsi un exemple de câble de charge 3 comprenant un tag 30 intégré à sa branche principale et deux tags 37, 38 intégrés respectivement à chaque fiche de connexion 311, 321.

Dans la pratique, le câble comprendra plutôt soit les deux tags 37 et 38 (un sur chacune des fiches de connexion 311, 321), soit un seul tag 30 pour l'ensemble du câble, la configuration à 3 tags 30, 37 et 38 étant a priori redondante.

Il est à noter que la présence de tags sur les fiches de connexion 311, 321 du câble de charge n'est pas toujours nécessaire, dans la mesure où ces fiches de connexion sont davantage normalisées que les connecteurs du câble de contrôle multi-connecteurs 4 discuté ci-après.

La **figure** 5 illustre, quant à elle, un exemple de câble de contrôle 4 comprenant un tag 40 intégré à sa branche principale et deux tags 43, 44 intégrés respectivement à chaque connecteur électrique 411, 421.

Dans ce cas, chaque branche secondaire et/ou connecteur de branche secondaire du câble de contrôle de charge 4 est munie d'un tag spécifique identifiant le type de connecteur concerné, et donc indirectement le ou les modules compatibles avec la branche secondaire.

Des tags (non représentés) peuvent également être intégrés aux éléments de connexion 34, 451 vers la station 1.

Dans la pratique, le câble comprendra plutôt soit les deux tags 43 et 44 (un sur chacun des connecteurs 411, 421), soit un seul tag 40 pour l'ensemble du câble, la configuration à 3 tags 40, 343 et 44 étant a priori redondante.

De manière pratique, ces tags peuvent être choisis parmi les pastilles d'identification, étiquettes, balises électroniques et/ou électromagnétiques, actives ou passives, avec ou sans contact.

En particulier, ces tags peuvent être, par exemple et sans que ces exemples soient limitatifs, des circuits électriques, des puces RFID passives ou des émetteurs activés par illumination électromagnétique ou par un branchement effectif du câble, de la fiche ou du connecteur, ou par tout autre moyen.

Selon un mode de réalisation particulier, au moins certains tags peuvent être constitués par un circuit de mesure de tension, ou de tout autre paramètre représentatif du fait que le connecteur et/ou le câble est branché.

Le cas échéant, l'activation du tag est fonction de la simple existence d'une tension (ou d'un courant), ou éventuellement de la valeur de cette tension (ou de ce courant)

Ainsi, de tels tags, sous la forme de circuits de mesure de tension, ne fournissent d'information d'identification du câble que lorsque le câble est connecté au module et/ou à la station : ils fonctionnent par contact électrique.

Lorsque la connexion n'est pas établie, aucune tension n'est mesurée, et par conséquent le câble n'est pas détecté.

De nombreux autres modes de réalisation des tags sont envisageables sans sortir du cadre de l'invention.

En d'autres termes, suivant la modalité d'interrogation de chaque tag et/ou du transport du signal d'identification, on peut ainsi prévoir une reconnaissance soit au moment d'un branchement, soit dès l'approche du câble, de la fiche et/ou du connecteur dans une zone d'identification à proximité et à portée des moyens de reconnaissance. Lorsque les moyens de reconnaissance sont montés sur un dispositif portatif, c'est ce dispositif lui-même qui peut être rapproché d'un câble, d'une fiche ou d'un connecteur pour effectuer la reconnaissance.

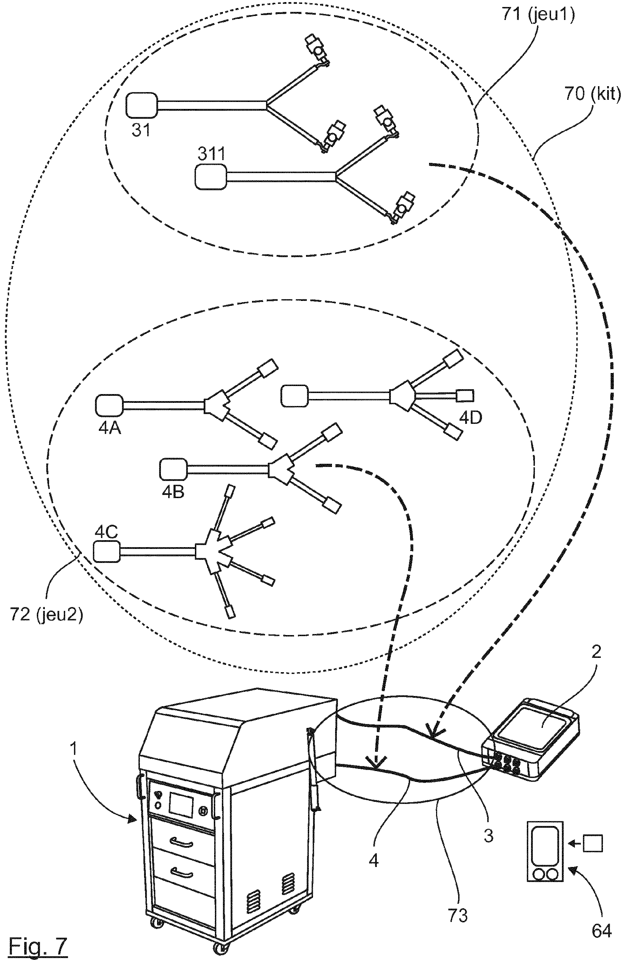

La **figure** 7 illustre un exemple de kit 70 de dispositifs de câblage comprenant un premier jeu 71 de deux câbles de charges 3I, 3II et un second jeu 72 de quatre deux câbles de contrôle de charge 4A, 4B, 4C, 4D, chaque câble étant muni des tags précités.

Les câbles de charge 3I, 3II sont tous les deux de type « deux en un » mais peuvent présenter des fiches de connexion au module et à la station qui différent.

Les câbles de contrôle de charge 4A, 4B, 4C, 4D présentent un nombre de branches secondaires qui varient : les câbles 4A et 4B sont de type « deux en un », le câble 4C est de type « quatre en un » et le câble 4D est de type « trois en un ».

Le kit 70 représenté n'est bien entendu qu'un exemple illustratif et non limitatif, ce kit pouvant être constitué plus généralement d'un premier jeu 71 d'au moins deux câbles de charges et/ou d'un second jeu 72 d'au moins deux câbles de contrôle de charge.

Une paire de connexion 73 de câbles de charge et de contrôle de charge 3, 4 est utilisée pour connecter un module 2 de batterie à une station de contrôle 1.

Cette paire de connexion 73 de câbles comprend d'une part un câble de charge 3 choisi parmi les câbles de charge 3I, 3II constituant le premier jeu 71, et d'autre part un câble de contrôle de charge 4 choisi parmi les câbles de contrôle de charge 4A, 4B, 4C, 4D constituant le second jeu 72.

Les câbles 3 et 4 constituant cette paire de connexion 73 de câbles sont donc identifiés et choisis chacun au sein du kit 70 de dispositifs de câblage de façon à être compatibles avec le module de batterie.

En l'occurrence, la **figure 7** illustre le cas où ce seraient les câbles 3II et 4B qui devraient être sélectionnés pour connecter la station de contrôle 1 au module 2.

Selon l'invention, un dispositif 64 de contrôle et d'assistance du nivellement de charge du module de batterie 2 est utilisé pour assister l'opérateur dans cette sélection.

Ce dispositif 64 intègre un programme et une bibliothèque de données de correspondance et de compatibilité entre des références de câbles et des références de modules, permettant, lorsque l'opérateur connecte au moins un des câbles de charge 3 et de contrôle de charge 4 choisis parmi les kits 71, 72, de définir sous forme de liste quelles références de modules sont compatibles avec ces câbles spécifiques.

Plus précisément, la bibliothèque de données contient pour cela une pluralité de références de modules 2 de batterie, par exemple au moins une quarantaine si toutes les références des modules actuellement sur le marché doivent être prises en compte, et une pluralité de références de câbles de charge 3 et de câbles de contrôle de la charge 4.

Cette base de données peut être fournie sous forme de mémoire fixe et/ou amovible (67) et/ou être téléchargée et mise à jour automatiquement, par internet, ou par l'opérateur lui-même, via une entrée manuelle ou par un moyen de communication sans contact, ou tout autre moyen approprié.

La bibliothèque de données contient par ailleurs une table de correspondance et/ou de compatibilité, ou tout moyen équivalent, qui permet au dispositif 64 de déduire à partir de références de câbles 3, 4 données, au moins une référence de module 2 de batterie, et/ou inversement.

Selon un premier mode de réalisation de cet aspect de l'invention, les paramètres d'entrée de la table de compatibilité sont donc par exemple les références des câbles 3, 4 et les paramètres de sortie sont la référence du ou des module(s) de batterie compatibles.

Le mode de réalisation du dispositif 64 illustré en **figure** 6 comprend en particulier les éléments suivants:
- des moyens de reconnaissance et d'identification du câble de charge 3 et du câble de contrôle de la charge 4 en configuration de connexion, mettant notamment en œuvre une identification et une lecture des tags 30, 37, 38, 40, 43, 44 intégrés aux câbles,
- des moyens de fourniture de données de reconnaissance et d'identification déterminées à partir de la lecture des tags ;
- des moyens de stockage et d'interrogation de la bibliothèque de correspondance et de compatibilité ;
- des moyens de comparaison des données de reconnaissance et d'identification fournies par les moyens de reconnaissance et d'identification avec les données stockées dans la bibliothèque de correspondance et de compatibilité, et des moyens de fourniture d'un résultat de comparaison ;
- des moyens d'affichage et/ou d'alerte activés par les moyens de comparaison.

Ce dispositif 64 est illustré sur la **figure** 6 sous la forme d'un boîtier autonome, c'est-à-dire mobile et indépendant de la station de contrôle 1.

Il comprend un écran d'affichage 65 qui constitue les moyens d'affichage et/ou d'alerte, permettant d'une part d'afficher la liste de références de modules 2 compatibles et d'autre part d'afficher un message d'alerte pour l'opérateur lorsque nécessaire.

Deux cas de figures sont notamment envisageables :
Dans un premier cas de figure, il peut arriver que la combinaison d'un premier câble de charge 3 et d'un second câble de contrôle électronique 4, formant une paire de connexion 73 de câbles, ne soit compatible avec aucun module 2 de batterie.
Dans un second cas de figure, il peut arriver qu'un module de batterie 2 soit d'abord connecté, avec un câble de charge 3 approprié, à la station de contrôle 1, puis qu'un second câble de contrôle électronique 4 inapproprié soit connecté à son tour.
Dans ces deux cas, un signal, visuel via l'afficheur 65 mais aussi possiblement sonore, peut être déclenché par le dispositif 64 afin de prévenir l'opérateur de son erreur.

Un tel signal peut également être déclenché dans le cas où les connexions mises en place par l'opérateur seraient défectueuses ou incomplètes, empêchant alors l'opération de nivellement de charge du module.

Le dispositif tel qu'illustré à la **figure** 6 comprend également, en option, des touches et/ou flèches de défilement 66 permettant par exemple de sélectionner et/ou de valider des choix dans des menus apparaissant à l'écran.

Eventuellement, le dispositif 64 peut aussi comprendre une interface de saisie de données (par exemple un clavier) qui n'est pas illustrée ici.

Une (ou plusieurs) carte(s) mémoire SD (en anglais « Secure Digital ») 67 peut également être insérée(s) dans le dispositif afin de faire entrer la bibliothèque et/ou de récupérer les données ou un historique, voire une carte SIM pour communiquer avec la station 1 ou autre.

Selon une autre possibilité (non illustrée), le dispositif 64 peut être intégré directement à la station de contrôle 1.

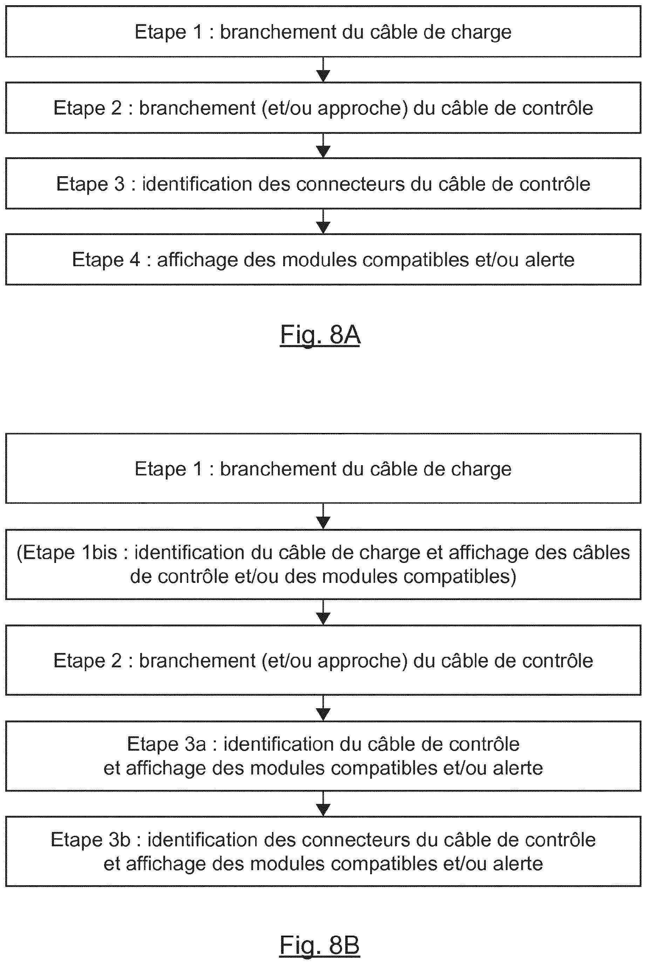

Un premier mode de réalisation du procédé de contrôle et d'assistance du nivellement de charge du module est décrit en lien avec la **figure 8A****.**

Selon ce mode de réalisation, l'opérateur branche sur l'interface de la station de contrôle 1 un câble de charge 3 choisi parmi un premier jeu 71 du kit 70. Le dispositif 64 identifie alors, via ses moyens de reconnaissance et d'identification, les tags 30, 37, 38 intégrés au câble ou connecteurs du câble de charge 3 et émet des données de reconnaissance et d'identification correspondant aux informations concernant ce câble de charge 3.

L'opérateur branche ensuite à la station de contrôle 1 un câble de contrôle de charge 4 choisi parmi un second jeu 72 du kit 70. Le dispositif 64 identifie alors, via ses moyens de reconnaissance et d'identification, ceux des tags 40, 43, 44 qui sont intégrés au câble et/ou aux connecteurs du câble de contrôle de charge 4 et émet des données de reconnaissance et d'identification correspondant aux informations concernant ce câble de contrôle de charge 4.
Sur la base de ces données d'entrée, c'est-à-dire les informations concernant les câbles 3 et 4, le dispositif 64 compare - via ses moyens de comparaison - les données d'entrées avec les données stockées dans la bibliothèque de correspondance et de compatibilité, et affiche enfin une liste de modules 2 compatibles si il y en a, ou dans le cas contraire émet une alarme visuelle ou sonore.

Selon un autre mode de réalisation d'un procédé selon l'invention, il est possible que l'opérateur connecte d'abord un câble de charge 3 approprié, entre le module 2 et la station de contrôle 1, puis utilise le dispositif 64 pour savoir quel(s) second(s) câble(s) de contrôle 4 il peut utiliser, ou inversement.

Dans ce cas, la référence du câble de charge 3 et la référence du module 2 sont les paramètres d'entrée dans la table de compatibilité, et la référence du ou des câble(s) 4 est le paramètre de sortie.

Des variantes du procédé de contrôle et d'assistance selon l'invention sont décrites en lien avec la **figure 8B****.**

Selon une variante, après l'étape décrite d'identification des tags 30, 37, 38 intégrés au câble de charge 3 décrite lien avec la **figure 8A****,** le dispositif 64 compare - via ses moyens de comparaison - la donnée d'entrée correspondant aux informations concernant ce premier câble de charge 3 avec les données stockées dans la bibliothèque de correspondance et de compatibilité, et affiche une liste de câbles de contrôle de charge 4 compatibles si il y en a, ou dans le cas contraire émet une alarme visuelle ou sonore.

L'opérateur branche ensuite à la station de contrôle 1 un câble de contrôle de la charge 4 tel que proposé par le dispositif 64.

Les étapes suivantes sont les mêmes que celles décrites en lien avec la **figure 8A****.**

Enfin, selon un autre mode de réalisation de l'invention, il est possible que l'opérateur entre dans le dispositif 64, via des moyens de saisie de données (non illustrés), la référence d'un module 2 de batterie avant de connecter les différents câbles 3, 4 à la station de contrôle et de nivellement de charge 1, puis interroge le dispositif afin qu'il lui indique quelle combinaison de câbles 3, 4 il peut utiliser.

Dans ce cas, la référence du module 2 est le paramètre d'entrée dans la table de compatibilité, et les références des câbles 3, 4 sont les paramètres de sortie.

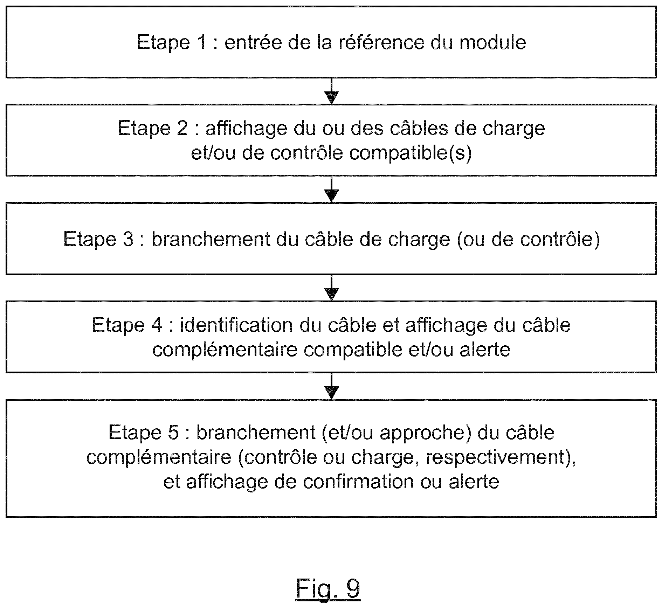

Cette autre variante du procédé de contrôle et d'assistance de l'invention est décrite en lien avec la **figure 9****.**

L'opérateur entre via les moyens de saisie de données une référence d'un module 2 de batterie qu'il doit charger.

Le dispositif 64 compare - via ses moyens de comparaison - ce paramètre d'entrée correspondant à la référence du module avec les données stockées dans la bibliothèque de correspondance et de compatibilité, et affiche une liste de combinaisons de câble de charge 3 et de câble de contrôle de charge 4 compatibles avec le module si il y en a, ou dans le cas contraire émet une alarme visuelle ou sonore.

L'opérateur peut ensuite brancher un premier câble parmi un câble de charge 3 ou un câble de contrôle de charge 4 proposés : le dispositif 64 identifie alors, via ses moyens de reconnaissance et d'identification, les tags 30, 37, 38, 40, 43, 44 intégrés au câble et/ou aux connecteurs du câble branché et émet des données de reconnaissance et d'identification correspondant aux informations concernant ce premier câble branché.

En comparant ces informations à la bibliothèque via la table de compatibilité, le dispositif 64 affiche une liste de références correspondant aux possibles câbles complémentaire, compatibles avec le module et le premier câble branché.

Enfin, l'opérateur branche un câble complémentaire, choisi parmi les références proposées : en comparant ces informations à la bibliothèque via la table de compatibilité, le dispositif 64 affiche une confirmation de la compatibilité de la paire de connexion 73 de câbles (c'est-à-dire un câble de charge 3 et un câble de contrôle de charge 4) avec le module 2 ou dans le cas contraire une alarme sonore ou visuelle.

## Revendications

1. Dispositif (64) de contrôle et d'assistance du nivellement de charge d'un module de batterie (2), destiné à coopérer avec un kit (70) de dispositifs de câblage conçus pour être connectés d'une part à un circuit de contrôle électronique d'un module de batterie électrique et d'autre part à une station de contrôle dudit module de batterie,
ledit kit (70) de dispositifs de câblage étant constitué d'un premier jeu (71) d'au moins deux câbles de charges et/ou d'un second jeu (72) d'au moins deux câbles de contrôle de charge,
chaque dispositif de câblage en configuration de connexion avec un module de batterie déterminé comprenant une paire de connexion (73) de câbles compatibles complémentaires (3, 4), à savoir d'une part un câble de charge (3), et d'autre part un câble de contrôle de la charge (4), choisis chacun au sein dudit kit (70) de dispositifs de câblage de façon à être compatibles avec ledit module de batterie ;
**caractérisé en ce qu'**il comprend :
- des moyens de reconnaissance et d'identification dudit câble de charge (3) et dudit câble de contrôle de la charge (4) dudit dispositif de câblage en configuration de connexion, et des moyens de fourniture de données de reconnaissance et d'identification ;
- des moyens de stockage et d'interrogation d'une bibliothèque de correspondance et de compatibilité entre lesdits modules de batterie et lesdits câbles (3, 4) dudit kit (70) de dispositifs de câblage compatibles avec chacun desdits modules de batterie ;
- des moyens de comparaison des données de reconnaissance et d'identification fournies par lesdits moyens de reconnaissance et d'identification avec les données stockées dans ladite bibliothèque de correspondance et de compatibilité, et des moyens de fourniture d'un résultat de comparaison ;
- des moyens d'affichage et/ou d'alerte activés par lesdits moyens de comparaison.

2. Dispositif (64) de contrôle et d'assistance du nivellement de charge d'un module de batterie (2) selon la revendication 1, **caractérisé en ce que** ledit au moins un câble de charge (3) est du type multi-connecteurs, comprenant :
- une branche principale (45) de câblage située à une première extrémité dudit dispositif de câblage (4), ladite branche principale (45) étant munie d'une prise de connexion (451) destinée à se connecter à une borne complémentaire (11) de ladite station de contrôle ;
- une pluralité de branches secondaires (41, 42) de câblage, chacune desdites branches secondaires (41, 42) étant pourvue d'un connecteur électrique destiné à se connecter à un connecteur complémentaire (22) dudit module (2) de batterie.

3. Dispositif (64) de contrôle et d'assistance du nivellement de charge d'un module de batterie (2) selon les revendications 1 et 2, **caractérisé en ce que** lesdits câbles (3, 4) comprennent des éléments d'identification, intégrés à tout ou partie de chaque câble (3, 4) et/ou d'un ou plusieurs connecteurs de câble,
et **en ce que** lesdits moyens de reconnaissance et d'identification sont constitués par au moins un dispositif de détection et de lecture desdits éléments d'identification.

4. Dispositif (64) de contrôle et d'assistance du nivellement de charge d'un module de batterie (2) selon les revendications 1 à 3, **caractérisé en ce que** lesdits éléments d'identification appartiennent au groupe comprenant les pastilles, étiquettes ou balises électroniques et/ou électromagnétiques, actives ou passives avec ou sans contact, y inclus les circuits de mesure électriques et électroniques et les puces RFID.

5. Dispositif (64) de contrôle et d'assistance du nivellement de charge d'un module de batterie (2) selon les revendications 1 à 4, **caractérisé en ce que** lesdits moyens d'affichage et/ou d'alerte comprennent un écran d'affichage.

6. Dispositif (64) de contrôle et d'assistance du nivellement de charge d'un module de batterie (2) selon la revendication 5, **caractérisé en ce que** lesdits moyens d'affichage et/ou d'alerte comprennent un écran de saisie de données.

7. Dispositif (64) de contrôle et d'assistance du nivellement de charge d'un module de batterie (2) selon les revendications 1 à 6, **caractérisé en ce que** ledit dispositif (64) est un boîtier autonome.

8. Dispositif (64) de contrôle et d'assistance du nivellement de charge d'un module de batterie (2) selon les revendications 1 à 7, **caractérisé en ce que** ledit dispositif (64) est intégré à ladite station de contrôle.

9. Dispositif (64) de contrôle et d'assistance du nivellement de charge d'un module de batterie (2) selon les revendications 1 à 8, **caractérisé en ce qu'**il comprend des moyens de mise à jour de ladite bibliothèque.

10. Procédé de contrôle et d'assistance du nivellement de charge d'un module de batterie (2), destiné à coopérer avec au moins un câble de charge (3) et au moins un câble de contrôle de la charge (4), choisis au sein d'un kit (70) de dispositifs de câblage conçus pour être connectés d'une part à un circuit de contrôle électronique d'un module de batterie électrique et d'autre part à une station de contrôle dudit module de batterie,
ledit kit (70) de dispositifs de câblage étant constitué d'un premier jeu (71) d'au moins deux câbles de charges et/ou d'un second jeu (72) d'au moins deux câbles de contrôle de charge,
chaque dispositif de câblage en configuration de connexion avec un module de batterie déterminé comprenant une paire de connexion (73) de câbles compatibles complémentaires (3, 4), à savoir d'une part un câble de charge (3), et d'autre part un câble de contrôle de la charge (4), choisis chacun au sein dudit kit (70) de dispositifs de câblage de façon à être compatibles avec ledit module de batterie ;
ledit procédé mettant en œuvre un dispositif (64) selon les revendications 1 à 9, destiné à coopérer avec ledit kit (70),
**caractérisé en ce qu'**il comprend les étapes de :
- branchement dudit câble de charge (3) à ladite station de contrôle ;
- branchement dudit câble de contrôle (4) à ladite station de contrôle et/ou mise à proximité dudit câble de contrôle (4) avec ladite station de contrôle ;
- identification dudit câble de contrôle (4) grâce auxdits moyens de reconnaissance et d'identification du dispositif (64) ;
- détermination et affichage d'une liste de références de modules de batterie (2) compatibles avec ledit câble de charge (3) et ledit câble de contrôle de la charge (4).

11. Procédé de contrôle et d'assistance du nivellement de charge selon la revendication 10, **caractérisé en ce qu'**il comprend en outre, après branchement dudit câble de charge (3), une étape d'identification dudit câble de charge (3) grâce auxdits moyens de reconnaissance et d'identification du dispositif (64).

12. Procédé de contrôle et d'assistance du nivellement de charge selon la revendication 11, **caractérisé en ce qu'**il comprend en outre, une étape d'affichage des câbles de contrôle de la charge (4) et/ou des modules compatibles avec ledit câble de charge (3).

13. Procédé de contrôle et d'assistance du nivellement de charge selon la revendication 10, **caractérisé en ce qu'**il comprend en outre, une étape d'activation desdits moyens d'affichage et/ou d'alerte dudit dispositif (64) par lesdits moyens de comparaison lorsque ledit résultat de comparaison entre lesdites données de reconnaissance et d'identification et les données stockées dans ladite bibliothèque de correspondance et de compatibilité est nul.

## Patentansprüche

1. Vorrichtung (64) zur Überwachung und Unterstützung des Ladeausgleichs eines Batteriemoduls (2), die dazu bestimmt ist, mit einem Satz (70) von Verkabelungsvorrichtungen zusammenzuwirken, die dazu ausgelegt sind, zum einen mit einer elektronischen Überwachungsschaltung eines elektrischen Batteriemoduls und zum anderen mit einer Überwachungsstation des Batteriemoduls verbunden zu werden,
wobei der Satz (70) von Verkabelungsvorrichtungen aus einem ersten Satz (71) von mindestens zwei Ladekabeln und/oder aus einem zweiten Satz (72) von mindestens zwei Ladeüberwachungskabeln besteht,
wobei jede Verkabelungsvorrichtung in der Verbindungkonfiguration mit einem bestimmten Batteriemodul ein Verbindungspaar (73) mit komplementären kompatiblen Kabeln (3, 4) umfasst, und zwar zum einen einem Ladekabel (3) und zum anderen einem Ladeüberwachungskabel (4), die jeweils aus dem Satz (70) von Verkabelungsvorrichtungen derart ausgewählt sind, dass sie zu dem Batteriemodul kompatibel sind;
**dadurch gekennzeichnet, dass** sie umfasst:
- Mittel zum Erkennen und Identifizieren des Ladekabels (3) und des Lade-überwachungskabels (4) der Verkabelungsvorrichtung in der Verbindungskonfiguration und Mittel zum Bereitstellen von Erkennungs- und Identifizierungsdaten;
- Mittel zum Speichern und Abfragen einer Entsprechungs- und Kompatibilitätsbibliothek zwischen den Batteriemodulen und den Kabeln (3, 4) des Satzes (70) von Verkabelungsvorrichtungen, die zu jedem der Batteriemodule kompatibel sind;
- Mittel zum Vergleichen der von den Erkennungs- und Identifizierungsmitteln bereitgestellten Erkennungs- und Identifizierungsdaten mit den in der Entsprechungs- und Kompatibilitätsbibliothek gespeicherten Daten und Mittel zum Bereitstellen eines Vergleichsergebnisses;
- Anzeige- und/oder Warnmittel, die durch die Vergleichsmittel aktiviert werden.

2. Vorrichtung (64) zur Überwachung und Unterstützung des Ladeausgleichs eines Batteriemoduls (2) nach Anspruch 1, **dadurch gekennzeichnet, dass** das mindestens eine Ladekabel (3) vom Mehrfachverbindertyp ist, umfassend:
- einen Verkabelungshauptzweig (45), der an einem ersten Ende der Verkabelungsvorrichtung (4) gelegen ist, wobei der Hauptzweig (45) mit einem Verbindungsstecker (451) versehen ist, der dazu bestimmt ist, mit einer komplementären Buchse (11) der Überwachungsstation verbunden zu werden;
- eine Mehrzahl von Verkabelungsnebenzweigen (41, 42), wobei jeder der Nebenzweige (41, 42) mit einem elektrischen Verbinder ausgestattet ist, der dazu bestimmt ist, mit einem komplementären Verbinder (22) des Batteriemoduls (2) verbunden zu werden.

3. Vorrichtung (64) zur Überwachung und Unterstützung des Ladeausgleichs eines Batteriemoduls (2) nach den Ansprüchen 1 und 2, **dadurch gekennzeichnet, dass** die Kabel (3, 4) Identifizierungselemente umfassen, die in das gesamte oder einen Teil jedes Kabels (3, 4) und/oder eines oder mehrerer Kabelverbinder integriert sind,
und dass die Erkennungs- und Identifizierungsmittel aus mindestens einer Vorrichtung zum Detektieren und Lesen der Identifizierungselemente bestehen.

4. Vorrichtung (64) zur Überwachung und Unterstützung des Ladeausgleichs eines Batteriemoduls (2) nach den Ansprüchen 1 bis 3, **dadurch gekennzeichnet, dass** die Identifizierungselemente der Gruppe angehören, die elektronische und/oder elektromagnetische, aktive oder passive Chips, Etiketten oder Tags mit oder ohne Kontakt, einschließlich elektrischer und elektronischer Messschaltungen und RFID-Computerchips, umfasst.

5. Vorrichtung (64) zur Überwachung und Unterstützung des Ladeausgleichs eines Batteriemoduls (2) nach den Ansprüchen 1 bis 4, **dadurch gekennzeichnet, dass** die Anzeige- und/oder Warnmittel einen Anzeigebildschirm umfassen.

6. Vorrichtung (64) zur Überwachung und Unterstützung des Ladeausgleichs eines Batteriemoduls (2) nach Anspruch 5, **dadurch gekennzeichnet, dass** die Anzeige- und/oder Warnmittel einen Dateneingabebildschirm umfassen.

7. Vorrichtung (64) zur Überwachung und Unterstützung des Ladeausgleichs eines Batteriemoduls (2) nach den Ansprüchen 1 bis 6, **dadurch gekennzeichnet, dass** die Vorrichtung (64) ein autonomes Gehäuse ist.

8. Vorrichtung (64) zur Überwachung und Unterstützung des Ladeausgleichs eines Batteriemoduls (2) nach den Ansprüchen 1 bis 7, **dadurch gekennzeichnet, dass** die Vorrichtung (64) in die Überwachungsstation integriert ist.

9. Vorrichtung (64) zur Überwachung und Unterstützung des Ladeausgleichs eines Batteriemoduls (2) nach den Ansprüchen 1 bis 8, **dadurch gekennzeichnet, dass** sie Mittel zum Aktualisieren der Bibliothek umfasst.

10. Verfahren zur Überwachung und Unterstützung des Ladeausgleichs eines Batteriemoduls (2), das dazu bestimmt ist, mit mindestens einem Ladekabel (3) und mindestens einem Ladeüberwachungskabel (4) zusammenzuwirken, die aus einem Satz (70) von Verkabelungsvorrichtungen ausgewählt sind, die dazu ausgelegt sind, zum einen mit einer elektronischen Überwachungsschaltung eines elektrischen Batteriemoduls und zum anderen mit einer Überwachungsstation des Batteriemoduls verbunden zu werden,
wobei der Satz (70) von Verkabelungsvorrichtungen aus einem ersten Satz (71) von mindestens zwei Ladekabeln und/oder aus einem zweiten Satz (72) von mindestens zwei Ladeüberwachungskabeln besteht,
wobei jede Verkabelungsvorrichtung in der Verbindungskonfiguration mit einem bestimmten Batteriemodul ein Verbindungspaar (73) mit komplementären kompatiblen Kabeln (3, 4) umfasst, und zwar zum einen einem Ladekabel (3) und zum anderen einem Ladeüberwachungskabel (4), die jeweils aus dem Satz (70) von Verkabelungsvorrichtungen derart ausgewählt sind, dass sie zu dem Batteriemodul kompatibel sind;
wobei das Verfahren eine Vorrichtung (64) nach den Ansprüchen 1 bis 9 einsetzt, die dazu bestimmt ist, mit dem Satz (70) zusammenzuwirken,
**dadurch gekennzeichnet, dass** es die folgenden Schritte umfasst:
- Anschließen des Ladekabels (3) an die Überwachungsstation;
- Anschließen des Überwachungskabels (4) an die Überwachungsstation und/oder Bringen des Überwachungskabels (4) in die Nähe der Überwachungsstation;
- Identifizieren des Überwachungskabels (4) dank der Erkennungs- und Identifizierungsmittel der Vorrichtung (64);
- Bestimmen und Anzeigen einer Liste mit Bezeichnungen von Batteriemodulen (2), die zu dem Ladekabel (3) und dem Ladeüberwachungskabel (4) kompatibel sind.

11. Verfahren zur Überwachung und Unterstützung des Ladeausgleichs nach Anspruch 10, **dadurch gekennzeichnet, dass** es ferner, nach dem Anschließen des Ladekabels (3), einen Schritt des Identifizierens de Ladekabels (3) dank der Erkennungs- und Identifizierungsmittel der Vorrichtung (64) umfasst.

12. Verfahren zur Überwachung und Unterstützung des Ladeausgleichs nach Anspruch 11, **dadurch gekennzeichnet, dass** es ferner einen Schritt des Anzeigens der Ladeüberwachungskabel (4) und/oder der Module, die zu dem Ladekabel (3) kompatibel sind, umfasst.

13. Verfahren zur Überwachung und Unterstützung des Ladeausgleichs nach Anspruch 10, **dadurch gekennzeichnet, dass** es ferner einen Schritt des Aktivierens der Anzeige- und/oder Warnmittel der Vorrichtung (64) durch die Vergleichsmittel umfasst, wenn das Vergleichsergebnis zwischen den Erkennungs- und Identifizierungsdaten und den in der Entsprechungs- und Kompatibilitätsbibliothek gespeicherten Daten gleich null ist.

## Claims

1. Device (64) for monitoring and assisting with the charge levelisation of a battery module (2), intended to cooperate with a kit (70) of cabling devices designed to be connected to both an electronic monitoring circuit of an electric battery module and a station for monitoring said battery module,
said kit (70) of cabling devices being formed by a first set (71) of at least two charging cables and/or by a second set (72) of at least two charge monitoring cables,
each cabling device in the configuration in which it is connected to a determined battery module comprising a connecting pair (73) of complementary compatible cables (3, 4), i.e. on the one hand a charging cable (3), and on the other hand a charge monitoring cable (4), each selected from said kit (70) of cabling devices such that they are compatible with said battery module;
**characterised in that** it comprises:
- means for recognising and identifying said charging cable (3) and said charge monitoring cable (4) of said cabling device in the connected configuration, and means for supplying recognition and identification data;
- means for storing and querying a correspondence and compatibility data library between said battery modules and said cables (3, 4) of said kit (70) of cabling devices compatible with each of said battery modules;
- comparison means for comparing the recognition and identification data supplied by said recognition and identification means with the data stored in said correspondence and compatibility data library, and means for supplying a comparison result;
- display and/or notification means activated by said comparison means.

2. Device (64) for monitoring and assisting with the charge levelisation of a battery module (2) according to claim 1, **characterised in that** said at least one charging cable (3) is of the multi-connector type, comprising:
- a main cabling branch (45) situated at a first end of said cabling device (4), said main branch (45) being provided with a connection plug (451) intended to be connected to a complementary terminal (11) of said monitoring station;
- a plurality of secondary cabling branches (41, 42), each of said secondary branches (41, 42) being provided with an electrical connector intended to be connected to a complementary connector (22) of said battery module (2).

3. Device (64) for monitoring and assisting with the charge levelisation of a battery module (2) according to claims 1 and 2, **characterised in that** said cables (3, 4) comprise identifying elements, integrated into all or part of each cable (3, 4) and/or of one or more cable connectors,
and **in that** said recognition and identification means are formed by at least one device for detecting and reading said identifying elements.

4. Device (64) for monitoring and assisting with the charge levelisation of a battery module (2) according to claims 1 to 3, **characterised in that** said identifying elements belong to the group comprising electronic and/or electromagnetic, active or passive, contact or contactless chips, tags or beacons, including electric and electronic measuring circuits and RFID chips.

5. Device (64) for monitoring and assisting with the charge levelisation of a battery module (2) according to claims 1 to 4, **characterised in that** said display and/or notification means comprise a display screen.

6. Device (64) for monitoring and assisting with the charge levelisation of a battery module (2) according to claim 5, **characterised in that** said display and/or notification means comprise a data entry screen.

7. Device (64) for monitoring and assisting with the charge levelisation of a battery module (2) according to claims 1 to 6, **characterised in that** said device (64) is an autonomous unit.

8. Device (64) for monitoring and assisting with the charge levelisation of a battery module (2) according to claims 1 to 7, **characterised in that** said device (64) is integrated into said monitoring station.

9. Device (64) for monitoring and assisting with the charge levelisation of a battery module (2) according to claims 1 to 8, **characterised in that** it comprises means for updating said library.

10. Method for monitoring and assisting with the charge levelisation of a battery module (2), intended to cooperate with at least one charging cable (3) and at least one charge monitoring cable (4), selected from within a kit (70) of cabling devices designed to be connected to both an electronic monitoring circuit of an electric battery module and a station for monitoring said battery module,
said kit (70) of cabling devices being formed by a first set (71) of at least two charging cables and/or by a second set (72) of at least two charge monitoring cables,
each cabling device in the configuration in which it is connected to a determined battery module comprising a connecting pair (73) of complementary compatible cables (3, 4), i.e. on the one hand a charging cable (3), and on the other hand a charge monitoring cable (4), each selected from said kit (70) of cabling devices such that they are compatible with said battery module; said method implementing a device (64) according to claims 1 to 9, intended to cooperate with said kit (70),
**characterised in that** it comprises the steps of:
- coupling said charging cable (3) to said monitoring station;
- coupling said monitoring cable (4) to said monitoring station and/or placing said monitoring cable (4) in the vicinity of said monitoring station;
- identifying said monitoring cable (4) thanks to said recognition and identification means of the device (64);
- determining and displaying a list of references of battery modules (2) compatible with said charging cable (3) and said charge monitoring cable (4).

11. Method for monitoring and assisting with charge levelisation according to claim 10, **characterised in that** it further comprises, after coupling said charging cable (3), a step of identifying said charging cable (3) thanks to said recognition and identification means of the device (64).

12. Method for monitoring and assisting with charge levelisation according to claim 11, **characterised in that** it further comprises a step of displaying the charge monitoring cables (4) and/or the modules compatible with said charging cable (3).

13. Method for monitoring and assisting with charge levelisation according to claim 10, **characterised in that** it further comprises a step of activating said display and/or notification means of said device (64) by said comparison means when said comparison result between said recognition and identification data and the data stored in said correspondence and compatibility data library is zero.
